# EUROPÄISCHE PATENTSCHRIFT

(11) **EP 2 370 691 B1**
(45) Veröffentlichungstag und Bekanntmachung des Hinweises auf die Patenterteilung: **27.03.2013**
(21) Anmeldenummer: 09805989.2
(22) Anmeldetag: 30.11.2009
(51) Int. Cl.: F03B 17/06

(54) **TURBINE**
TURBINE
TURBINE

(30) Priorität: 01.12.2008 CH 18912008
(43) Veröffentlichungstag der Anmeldung: 05.10.2011
(73) Patentinhaber: Isik, Hasan Hüseyin, 9500 Wil /SG 1 (CH)
(72) Erfinder: Isik, Hasan Hüseyin, 9500 Wil /SG 1 (CH)
(74) Vertreter: Feldmann, Clarence Paul
(86) Internationale Anmeldenummer: PCT/CH2009/000380
(87) Internationale Veröffentlichungsnummer: WO 2010/063131

(56) Entgegenhaltungen:
- WO-A1-2008/115558
- WO-A2-2004/107527
- CA-A1- 2 544 170
- CA-A1- 2 631 708
- US-A- 6 006 518

## Beschreibung

Die Erfindung betrifft eine Turbine, insbesondere eine Wasserturbine zur Energiegewinnung in Fliessgewässern.

Turbinen zur Energiegewinnung, insbesondere auch Turbinen in Wasserkraftwerken sind bekannt. Sie weisen zumeist einen senkrecht zur Fliessrichtung des Gewässers angeordneten Rotor mit daran befindlichen, rotierbaren Turbinenschaufeln auf. Der Anstellwinkel der Turbinenschaufeln ist ggf. in Grenzen einstellbar und ist während des Betriebes unverändert.

Bekannt sind ebenfalls Antriebsräder für Mahlwerke, Hammerwerke und Antriebsräder für Flussschiffe mit jeweils festen Schaufeln.

Windmühlen mit schwenk- oder verstellbaren Schaufelelementen sind aus den US 3938907 und US 4468169 bekannt. Weiterhin zeigen auch die CA-A-2544170 oder die US-A-6006518 Wasserturbinen mit Schaufeln, die schwenkbar an deren Aussenumfang angeordnet sind.

Der Erfindung liegt nun die Aufgabe zugrunde, eine Turbine, insbesondere eine Wasserturbine zur Energiegewinnung in Fliessgewässern zu schaffen, die an unterschiedliche Einsatzbedingungen in einfacher Weise anpassungsfähig ist und die einen vergleichsweise hohen Wirkungsgrad ermöglicht.

Die Aufgabe ist mit den Merkmalen des Patentanspruchs 1 gelöst.

Die einzelnen Schaufeln einer Turbine sind am äusseren Umfang eines Turbinenrades gelenkig angeordnet. Sie schwenken nur unter Einwirkung des fliessenden Mediums radial nach aussen und klappen in Gegenrichtung (der Fliessrichtung abgewandte Seite) wieder nach innen, den Mantel des Turbinenrades bildend. Dies verringert die Reibung und damit den Energieverlust. Der Anstellwinkel beträgt 0° bis ca. 90° zur Mantellinientangente. Entsprechend der wesentlichen Fliessrichtung oder Fliesshöhe können die Schaufeln im oberen oder (und) im unteren Teil der Turbine ausschwenken. An der Aussenkante in Achsrichtung der Turbine ist zumindest an einigen Schaufeln ein aufblasbares Element angeordnet, z. B. in Form eines Schlauches oder einzelner Bälle.

Bevorzugte Ausführungsformen sind in den abhängigen Patentansprüchen offenbart.

So kann Beginn oder während des ausschwenkens der Schaufeln das aufblasbare Element mit Luft o. a. Gasen gefüllt sein um das ausschwenken zu forcieren. In der Gegenrichtung wird durch ablassen der Luft das einklappen der Schaufeln begünstigt. Möglich ist es dabei auch, das aufblasbare Element nur im Bereich der Aussenkanten (nahe zum Turbinenrad) anzuordnen und nicht über die gesamte Länge der Schaufeln.

Die Schaufeln entsprechen in ihrer Aussenform einem Teil der Mantelfläche eines Zylinders. Sie können an der Innenseite noch Leitgatter aufweisen, die einstellbar oder feststehend angeordnet sind.

Bevorzugt weist die Turbine 8-12 Schaufeln auf.

Es ist ebenfalls denkbar, mehrere Turbinen nebeneinander und/oder übereinander anzuordnen, z. B. in grösseren Fliessgewässern oder im Meer.

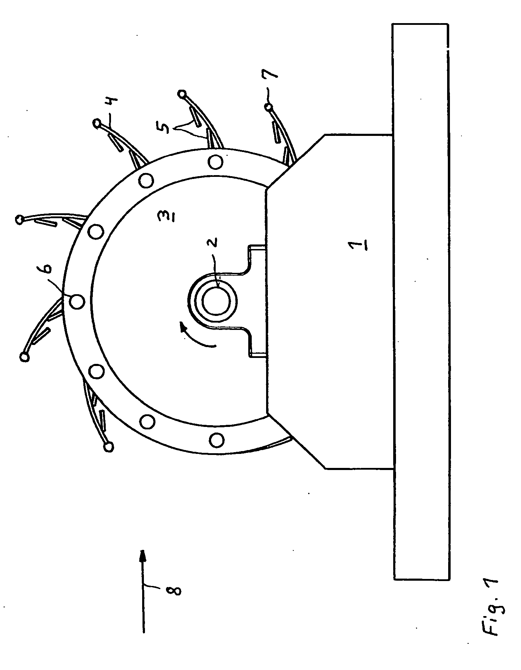

Die Erfindung wird nachfolgend in einem Ausführungsbeispiel anhand einer Zeichnung näher beschrieben. In der Zeichnung zeigen die
Fig. 1: eine Seitenansicht der Turbine

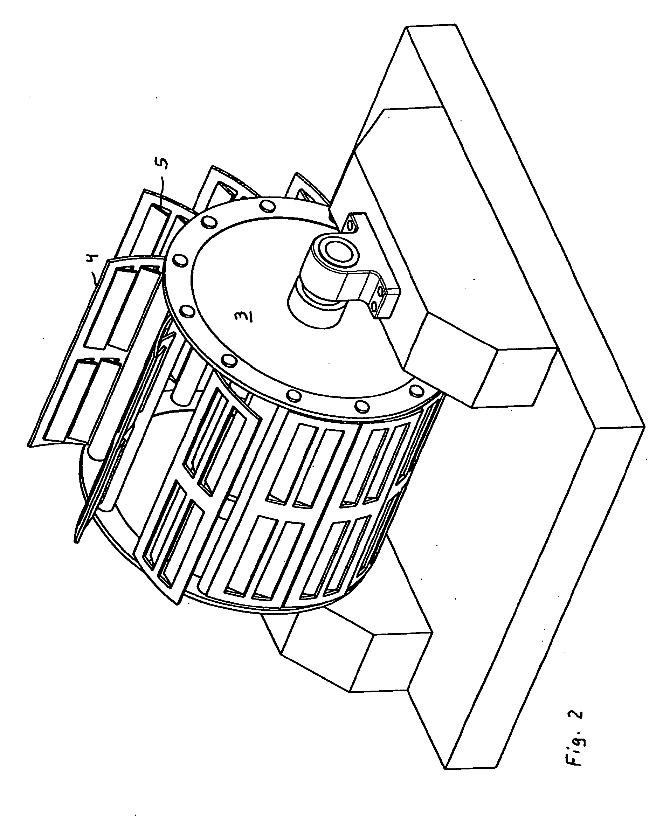

Fig. 2: eine perspektivische Darstellung der Turbine in einer weiteren Ausführungsform.

In einer Basis 1 ist eine Turbine um ihre Achse 2 drehbar gelagert aufgenommen. Die Richtung der Achse 2 ist dabei etwa senkrecht zur Fliessrichtung 8 eines Flusses, wobei die Turbine horizontal und vollständig unter Wasser angeordnet ist.

Der Mantel der Turbine ist durch 12 Schaufeln 4 gebildet, die schwenkbar in Gelenken 6 der Turbinenräder 3 angeordnet sind. Die Gelenke 6 sind entsprechend nahe am Umfang der Turbinenräder 3 angebracht.

Die Schaufeln 4 weisen eine Krümmung entsprechend des Radius des Turbinenrades auf und sind an ihrer Innenseite mit einem Leitgatter 5 versehen. An der Aussenkante jeder Schaufel 4 ist ein in Achsrichtung verlaufender und mit Luft aufblasbarer Schlauch 7 angeordnet. Die Luft wird mittels einer nicht dargestellten Versorgungseinheit zu- und abgeführt.

Die Schaufeln schwenken aus, sobald ihre Lage etwa parallel zur Fliessrichtung 8 ist. Die Schwenkbewegung wird durch den Fliessdruck und die einsetzende Luftfüllung des Schlauches 7 erleichtert resp. beschleunigt. Nach einer Drehung der Turbine um mehr als 180° beginnen die Schaufeln 4 wieder einzuklappen. Die Luft wird bereits ab einer Drehung von mehr als 90° wieder abgelassen. Nach ca. 270° ist eine Schaufel 4 wieder vollständig eingeklappt.

### Bezugszeichen

- 1: Basis
- 2: Achse
- 3: Turbinenrad
- 4: Schaufel
- 5: Leitgatter
- 6: Gelenk
- 7: Schlauch
- 8: Fliessrichtung

## Patentansprüche

1. Wasserturbine zur Energiegewinnung in Fliessgewässern, die in ihrer Grundform zylinderförmig ist und die mit Schaufeln versehen ist, die parallel zu einer Achse (2) der Turbine angeordnet sind, wobei die Schaufeln (4) schwenkbar in Gelenken (6) zwischen Turbinenrädern (3) an deren Aussenumfang angeordnet sind,
**dadurch gekennzeichnet, dass** mindestens eine Schaufel (4) entlang ihrer Aussenkante parallel zur Achse (2) mit einem aufblasbaren Element versehen ist.

2. Wasserturbine nach Anspruch 1, **dadurch gekennzeichnet, dass** sie 8 bis 12 Schaufeln (4) umfasst.

3. Wasserturbine nach Anspruch 1 oder 2, **dadurch gekennzeichnet, dass** an der Innenseite von mindestens einer Schaufel (4) ein Leitgatter (5) angeordnet ist.

4. Wasserturbine nach Anspruch 1, **dadurch gekennzeichnet, dass** das aufblasbare Element nur im Bereich der Schaufelenden angeordnet ist.

## Claims

1. A water turbine for producing energy in flowing water, which is cylindrical in its basic form and is provided with blades arranged parallel to an axis (2) of the turbine, wherein the blades (4) are arranged to be pivotable in joints (6) between the turbine wheels (3) on the outer circumference thereof,
**characterized in that** at least one blade (4) is provided along its outer edge parallel to the axis (2) with an inflatable element.

2. The water turbine according to claim 1, **characterized in that** said water turbine comprises 8 to 12 blades (4).

3. The water turbine according to claim 1 or claim 2, **characterized in that** on the inner side of at least one blade (4) a guide gate (5) is arranged.

4. The water turbine according to claim 1, **characterized in that** the inflatable element is arranged only in the region of the blade ends.

## Revendications

1. Turbine hydraulique pour exploiter de l'énergie dans des eaux courantes, dont la forme de base est cylindrique et qui est dotée d'aubes agencées parallèlement à un axe (2) de la turbine, sachant que les aubes (4) sont disposées pivotantes dans des articulations (6) entre des roues de turbine (3) sur leur pourtour extérieur,
**caractérisée en ce qu'**au moins une aube (4) est dotée d'un élément gonflable le long de son arête extérieure parallèlement à l'axe (2).

2. Turbine hydraulique selon la revendication 1, **caractérisée en ce qu'**elle comprend 8 à 12 aubes (4).

3. Turbine hydraulique selon la revendication 1 ou 2, **caractérisée en ce qu'**un râtelier directeur (5) est disposé sur la face intérieure d'au moins une aube (4).

4. Turbine hydraulique selon la revendication 1, **caractérisée en ce que** l'élément gonflable est disposé uniquement au niveau des extrémités des aubes.
